# EUROPEAN PATENT APPLICATION

(11) **EP 2 056 647 A2**
(43) Date of publication of application: **06.05.2009**
(21) Application number: 08160089.2
(22) Date of filing: 10.07.2008
(51) Int. Cl.: H04W 88/06

(54) **Wireless cordless telephone and wireless cordless base unit**

(30) Priority: 31.10.2007 CN 200710124221
(71) Applicant: Shenzhen Taifeng Network Technology Co., Ltd., Shenzhen (CN)
(72) Inventor: Shao, Hua 2 Building, Taifeng Electronical City,, Nanshan District, Shenzhen (CN)
(74) Representative: Scheffler, Marco

(57) **Abstract**

Wireless cordless telephone and wireless cordless base unit. A wireless cordless telephone includes a base unit and at least one cordless handset connected to the base unit. The base unit includes a cordless antenna for transferring cordless telephone signals with the handset; a cordless exchange unit connected to the cordless antenna, for processing and converting telephone signals into cordless telephone signals, and processing and converting cordless telephone signals into telephone signals and exporting the signals; a wireless antenna for transferring digital telephone signals with wireless mobile network; a wireless exchange unit connected to the wireless antenna, for processing and converting analog telephone signals into cordless telephone signals sent to wireless mobile network, and processing and converting digital telephone signals into analog telephone signals and exporting the signals; a customer identity recognition unit connected to the wireless exchange unit, for storing data of customer; and a micro processor connected to the two units, for controlling transfer of the telephone signals.

## Description

### Field of the Invention

The present invention relates to communication devices and, more particularly to a wireless cordless telephone.

### Background

The digital cordless telephone is a kind of wireless telephone, which uses high frequency carrier wave to transfer information. Comparing with an analog telephone, it has higher quality of voice, higher anti-jamming and security, longer distance of transfer, stronger penetrability, lower power consumption, scantier power and so on.

For conventional telephones, there are two kinds of wireless communication modes. One kind is that the phone (e.g. digital cordless telephone) supports wireless communication between a base unit and a handset, but the phone requires a public switched telephone network (hereinafter, PSTN) to communicate with external phones. The phone such as cordless telephone belongs to this kind. The other kind is that the phone (e.g. cordless telephone) supports communication in a wireless mobile network, for example, global system for mobile (hereinafter, GSM) communication. The second kind of phone has no cordless handset and can't communicate with the cordless handset. Thus, both kinds of communication mode just achieve part of wireless communication and can't satisfy requirement of more convenient wireless communication for a customer.

### Summary

It is therefore an object of the present invention to provide a wireless cordless telephone for solving the problem, that the conventional telephones just support wireless or cordless communication and can't satisfy requirement of more convenient communication for a customer.

In accordance with an embodiment of the present invention, a wireless cordless telephone comprises a base unit and at least a cordless handset connected to the base unit. The base unit comprises a cordless antenna, a cordless exchange unit, a wireless antenna, a wireless exchange unit, a customer identity recognition unit and a micro processor. The cordless antenna is adapted (i.e., configured or arranged) for transferring cordless telephone signals with the handset using wireless communication frequency band. The cordless exchange unit is connected to the cordless antenna. The cordless exchange unit is adapted for processing and converting telephone signals into cordless telephone signals which are sent to cordless handset via the cordless antenna, and processing and converting cordless telephone signals sent by the cordless antenna into telephone signals and exporting the telephone signals. The wireless antenna is adapted for transferring digital telephone signals with wireless mobile network. The wireless exchange unit is connected to the wireless antenna. The wireless exchange unit is adapted for processing and converting analog telephone signals into cordless telephone signals which are sent to wireless mobile network via the wireless antenna, and processing and converting digital telephone signals sent via the wireless antenna from wireless mobile network into analog telephone signals and exporting the analog telephone signals. The customer identity recognition unit is connected to the wireless exchange unit and is adapted for storing data information of customer. The micro processor is connected to the cordless exchange unit and the wireless exchange unit. The micro processor is adapted for controlling transfer of the telephone signals between the cordless exchange unit and the wireless exchange unit.

It is therefore another object of the present invention to provide a wireless cordless telephone base unit.

In accordance with another embodiment of the present invention, a wireless cordless base unit comprises a cordless antenna, a cordless exchange unit, a cordless exchange unit, a wireless antenna, a wireless exchange unit, a customer identity recognition unit and a micro processor. The cordless antenna is adapted (i.e., configured or arranged) for transferring cordless telephone signals with the handset using wireless communication frequency band. The cordless exchange unit is connected to the cordless antenna. The cordless exchange unit is adapted for processing and converting telephone signals into cordless telephone signals which are sent to cordless handset via the cordless antenna, and processing and converting cordless telephone signals sent by the cordless antenna into telephone signals and exporting the telephone signals. The wireless antenna is adapted for transferring digital telephone signals with wireless mobile network. The wireless exchange unit is connected to the wireless antenna. The wireless exchange unit is adapted for processing and converting analog telephone signals into cordless telephone signals which are sent to wireless mobile network via the wireless antenna, and processing and converting digital telephone signals sent by the wireless antenna from wireless mobile network into analog telephone signals and exporting the analog telephone signals. The customer identity recognition unit is connected to the wireless exchange unit and is adapted for storing data information of customer. The micro processor is connected to the cordless exchange unit and the wireless exchange unit. The micro processor is adapted for controlling transfer of the telephone signals between the cordless exchange unit and the wireless exchange unit.

According to embodiments of the present invention, the cordless telephone, which integrates the wireless antenna, the wireless exchange unit, the customer identity recognition unit, the cordless antenna and the cordless exchange unit, supports wireless telecommunication in the wireless mobile network and the cordless telecommunication between the base unit and the cordless handset. This facilitates use of wireless telecommunication between customers.

Other objects, advantages and novel features of the present invention will become more apparent from the following detailed description when taken in conjunction with the accompanying drawings, in which:

### Brief Description of the Drawings

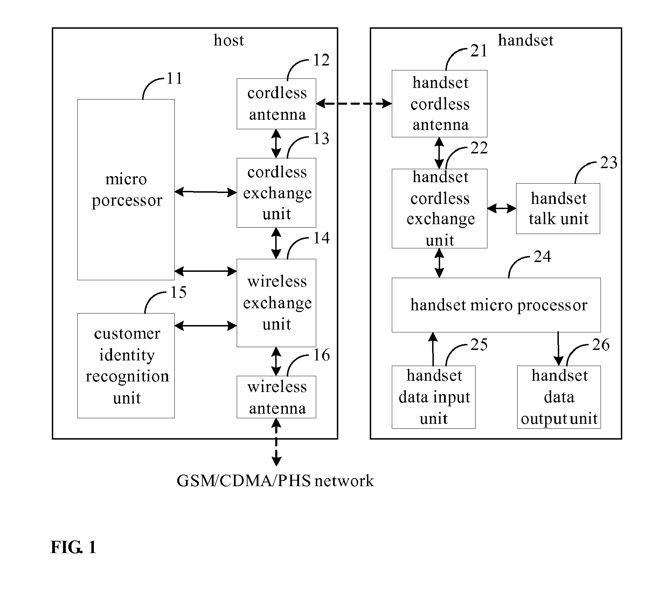

FIG. 1 is a block diagram showing functional structure of a wireless cordless telephone according to an embodiment of the present invention.

### Detailed Description

Embodiments of the present invention will be explained below in detail with reference to the accompanying drawings. However, configuration having the same functions among the embodiments will be assigned the same reference numerals and overlapping explanation will be omitted. The following description of the embodiment(s) is merely exemplary in nature and is no way intended to limit the invention, its application, or uses.

According to an embodiment of the present invention, the wireless mobile network may be Global System for Mobile (hereinafter, GSM) communications network, Code Division Multiple Access (hereinafter, CDMA) network, Personal Handyphone System (hereinafter, PHS) network, Wideband Code Division Multiple Access (hereinafter, WCDMA) network, Time Division - Synchronous Code Division Multiple Access (hereinafter, TD - SCDMA) network or CDMA2000 and so on. Work frequency band of the wireless mobile network includes GSM850MHz, GSM900MHz, GSM1800MHz, GSM1900MHz, CDMA450MHz, CDMA800MHz or PHS1900 MHz, and so on.

In a further embodiment, the base unit of the wireless cordless telephone communicates with cordless handset communicated therewith using World Digital Cordless Telephony (hereinafter, WDCT) or Digital Enhanced Wireless telecommunications (hereinafter, DECT) and so on. The bands available for the phone include 2.4GHz, 1.8GHz, 5.8GHz, 45-48MHz, 46-49MHz or 900MHz, etc.

FIG.1 shows a functional relationship between parts of the wireless cordless telephone according to an embodiment of the present invention. To be more convenient for explaining clearly, correlative parts of embodiment are shown in FIG. 1.

When there is a coming call, the wireless exchange unit 14 reads information of customer, for example, personal identification number (PIN), International Mobile Subscriber Identity (IMSI), Identification Key (KI), authentication and encryption algorithm, Local Area Identifier (LAI), Temporary Mobile Station Identity (TMSI), forbidden accessing public telephone network identity, which is stored in the customer identity recognition unit 15. Then the wireless exchange unit 14 processes (e.g., identifies, authenticates, decodes, decrypts) digital telephone signals (i.e., digital phonetic signals, digital data signals, etc) received by wireless antenna 16 from the wireless mobile network, and converts processed digital telephone signals into analog telephone signals (i.e., analog phonetic signals, analog data signals, etc). The analog telephone signals are sent to the cordless exchange unit 13 under controlling of the micro processor 11 through multiple ways. The cordless exchange unit 13 separately processes received analog telephone signals, converts the processed analog telephone signals into cordless digital telephone signals, and sends the cordless digital telephone signals to the cordless handset via the cordless antenna 12. In the illustrated embodiment, one cordless handset is applied in the telephone. In other embodiments, two or more cordless handsets could be applied in the telephone. The processing of the received analog telephone signals includes encoding, encryption and so on. Alternatively, the processing of the received analog telephone signals is carrier wave process.

The handset cordless exchange unit 22 separately processes (i.e., demodulates, decodes, decrypts, etc) the cordless telephone signals received from the handset cordless antenna 21 and converts the processed cordless telephone signals into analog telephone signals including analog phonetic signals, analog data signals, etc. Then, under controlling of the handset micro processor 24, the handset cordless exchange unit 22 sends analog phonetic signals to the handset talk unit 23 and sends analog data signals to the handset micro processor 24 for processing. The processed analog data signals are sent to the handset data output unit 26 by the handset micro processor 24. The handset data output unit 26 processes and exports the analog data signal.

When making a call, the handset data input unit 25 sends out analog data signals (e.g., calling number) inputted by customer. The handset micro processor 24 processes received analog data signals and sends the processed analog data signals to the handset cordless exchange unit 22. The handset talk unit 23 receives analog phonetic signals of customer and sends the received analog phonetic signals to the handset cordless exchange unit 22 under controlling of the handset micro processor 24. The handset cordless exchange unit 22 separately processes (e.g. carrier wave process, encodes or encrypts, etc) analog data signals and analog phonetic signals, and converts the processed signals into cordless telephone signals (i.e., cordless data signals, cordless phonetic signals), which are sent to the base unit by the handset cordless antenna 21. The cordless exchange unit 13 converts the cordless telephone signals (i.e., cordless data signals, cordless phonetic signals), which are received from the cordless antenna 12, into analog telephone signals (i.e., analog data signals and analog phonetic signals) by demodulating, decoding, decrypting and so on. Under controlling of the micro processor 11, the analog telephone signals are separately sent to the wireless exchange unit 14. The wireless exchange unit 14 reads information stored in the customer identity recognition unit 15 and separately converts the analog telephone signals (i.e., analog telephone signals, analog data signals) into digital telephone signals (i.e., digital telephone signals, digital data signals) by identifying, authenticating, encoding, encrypting, and so on. The digital telephone signals are sent to the wireless mobile network via the wireless antenna 16.

In one embodiment, if the wireless mobile network supported by the wireless cordless telephone is GSM, the customer identity recognition unit 15 is Subscriber Identity Module (SIM) card. If the wireless mobile network is CDMA, PHS, WCDMA, TD-SCDMA or CDMA2000 and so on, the customer identity recognition unit 15 is User Identity Module, a card or a module which can be software, hardware or a combination of software and hardware.

In other embodiments, the base unit of the wireless cordless telephone may include some units (not shown) such as a call unit, a data input unit and a data output unit, thereby achieving calling and listening. When customer chooses the base unit to listening, the wireless exchange unit 14 processes the digital telephone signals received from the wireless antenna 16 and convert the process signals into analog telephone signals. Under controlling of the micro processor 11, the analog phonetic signals are sent to the call unit, and the analog data signals processed by the micro processor are sent to the data output unit 11. When the customer uses the base unit to send a call, the wireless exchange unit 14 receives analog telephone signals and converts the received signals into digital telephone signals, which are sent to the wireless mobile network via the wireless antenna 16. The analog telephone signals include analog phonetic signals sent by the call unit, and analog data signals sent by the micro processor 11, which are received by the data input unit and sent to the micro processor 11.

Furthermore, the base unit and the handset can achieve functions of calls conference and intercom. The customer can input data information (e.g. telephone directory) by the data input unit or the handset data input unit 25. The data information is sent to the customer identity recognition unit 15 by the wireless exchange unit 14 under controlling of the micro processor 11. The information searched by customer can be read from the customer identity recognition unit 15 and shown in the data output unit or the handset data output unit 26.

It is to be noted that, every unit of the base unit and the handset described above can be implemented by existing circuit units or chips. Alternatively, these existing units can be improved or integrated for use in the present telephone. For example, integrating related units in a chip can reduce impropriate area and material cost.

In the embodiment, because the base unit of the cordless telephone integrates the wireless antenna, the wireless exchange unit, the customer identity recognition unit, the cordless antenna and the cordless exchange unit, the wireless cordless telephone supports wireless telecommunication in the wireless mobile network (e.g. GSM, CDMA, PHS) and the cordless telecommunication between the base unit and the wireless cordless handset. This facilitates wireless telecommunication between customers.

Those skilled in the art can now appreciate from the foregoing description that the broad teachings of the present invention can be implemented in a variety of forms, Therefore, while this invention has been described in connection with particular examples thereof, the true scope of the invention should not be so limited since other modification will become apparent to the skilled practitioner upon a study of the drawings, the specification and the claims.

## Claims

1. A wireless cordless base unit, comprising:
a cordless antenna (12) adapted for transferring cordless telephone signals to a cordless handset using a wireless communication frequency band;
a cordless exchange unit (13) connected to the cordless antenna, the cordless exchange unit being adapted for processing and converting telephone signals into cordless telephone signals which are suitable to be sent to a cordless handset via the cordless antenna, and processing and converting cordless telephone signals sent by the cordless antenna into telephone signals and exporting the telephone signals;
a wireless antenna (16) adapted for transferring digital telephone signals to a wireless mobile network;
a wireless exchange unit (14) connected to the wireless antenna and the cordless exchange unit, the wireless exchange unit being adapted for processing and converting analog telephone signals to cordless telephone signals which are sent to a wireless mobile network via the wireless antenna, receiving digital telephone signals captured by the wireless antenna from the wireless mobile network, and processing and converting the received digital telephone signals to analog telephone signals and exporting the analog telephone signals;
a customer identity recognition unit (15) connected to the wireless exchange unit, the customer identity recognition unit being adapted for storing data information of customer; and
a micro processor (11) connected to the cordless exchange unit and the wireless exchange unit, the micro processor being adapted for controlling transfer of telephone signals between the cordless exchange unit and the wireless exchange unit.

2. The wireless cordless base unit of claim 1, wherein the wireless mobile network is selected from the group consisting of: GSM, CDMA, PHS, WCDMA, TD-SCDMA and CDMA2000 network.

3. The wireless cordless base unit according to one of the preceding claims, wherein the wireless communication frequency band is selected from the group consisting of: 2.4GHz, 1.8GHz, 5.8GHz, 45-48MHz, 46-49MHz and 900MHz.

4. The wireless cordless base unit according to one of the preceding claims, wherein the telephone signals are analog telephone signals, the cordless telephone signals are telephone signals or cordless analog telephone signals.

5. The wireless cordless base unit according to one of the preceding claims, wherein the processing of signals in the cordless exchange unit (13) is selected from the group consisting of: encoding, encrypting, decoding and decrypting.

6. The wireless cordless base unit according to one of the preceding claims, wherein the processing of signals in the wireless exchange unit (14) is selected from the group consisting of: identifying, authenticating, decoding, decrypting, encoding or encrypting.

7. A wireless telephone comprising a cordless base unit according to one of claims 1-6 and at least one cordless handset connected to the base unit.
